# DEMANDE DE BREVET EUROPEEN

(11) **EP 3 686 976 A1**
(43) Date de publication de la demande: **29.07.2020**
(21) Numéro de dépôt: 20153227.2
(22) Date de dépôt: 22.01.2020
(51) Int. Cl.: H01M 8/0206, H01M 8/0267, H01M 8/0258, H01M 8/0297, H01M 8/0254

(54) **PLAQUE BIPOLAIRE POUR HOMOGENEISER LES TEMPERATURES DE LIQUIDE DE REFROIDISSEMENT**

(30) Priorité: 24.01.2019 FR 1900636
(71) Demandeur: Commissariat à l'énergie atomique et aux énergies alternatives, 75015 Paris (FR)
(72) Inventeur: POIROT-CROUVEZIER, Jean-Philippe, 38054 Grenoble cedex 9 (FR)
(74) Mandataire: Guérin, Jean-Philippe

(57) **Abrégé**

L'invention porte sur une plaque bipolaire (5) pour réacteur électrochimique comprenant des première et deuxième tôles conductrices (61, 62), avec :
-une zone réactive (619) ;
-un premier collecteur d'écoulement de fluide (596) ;
-des premiers canaux d'écoulement (618) sur la face externe de la première tôle, ;
-une première zone d'homogénéisation (614) comportant des deuxièmes canaux d'écoulement (641);
-un deuxième collecteur d'écoulement de fluide (592) ;
-des troisièmes canaux d'écoulement (628) sur la face externe de la deuxième tôle,
-une deuxième zone d'homogénéisation (624) comportant des quatrièmes canaux d'écoulement (642) ;
-des canaux d'écoulement de liquide de refroidissement ménagés entre les première et deuxième tôles et s'étendant selon la direction longitudinale dans la zone réactive ;
-au moins un deuxième canal d'écoulement dit de restriction (6411) comporte un renfoncement (645) pénétrant dans une deuxième nervure respective (644).

## Description

L'invention concerne les réacteurs électrochimiques incluant un empilement de cellules électrochimiques, et plus particulièrement des plaques bipolaires d'un empilement avec des membranes échangeuses de protons. De tels réacteurs électrochimiques constituent par exemple des piles à combustible ou des électrolyseurs.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane échangeuse de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est oxydé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires alimentent en continu la zone réactive des électrodes en réactifs, au fur et à mesure de leur consommation. Les plaques bipolaires comprennent aussi des canaux d'écoulement pour guider du liquide de refroidissement évacuant la chaleur produite. Les produits de réaction et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

On distingue principalement trois modes de circulation des réactifs dans les canaux d'écoulement :
- les canaux en serpentin : un ou plusieurs canaux parcourent l'ensemble de la surface active en plusieurs allers-retours.
- les canaux parallèles : un faisceau de canaux parallèles et traversants parcourent la surface active de part en part. Les canaux d'écoulement peuvent être rectilignes ou légèrement ondulés.
- les canaux interdigités : un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Pour favoriser la compacité et les performances, la conception implique de réduire les dimensions des canaux d'écoulement. Le mode de circulation par canaux parallèles est alors généralement favorisé, pour limiter les pertes de charge dans de tels canaux d'écoulement de dimensions réduites, et éviter des problèmes d'écoulement de liquide de refroidissement pouvant conduire à des points chauds.

La conception avec des canaux de circulation parallèles ne permet cependant pas de garantir une homogénéité suffisante de la température au niveau de l'ensemble des canaux de la zone réactive.

Il est par ailleurs important d'homogénéiser les débits de réactifs sous peine d'altérer le fonctionnement du réacteur électrochimique. A cet effet, les plaques bipolaires comportant des canaux d'écoulement parallèles utilisent fréquemment des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices d'injection, et d'autre part dans des orifices de collecteurs respectifs. Une zone d'homogénéisation comprend des canaux qui mettent en communication des orifices d'injection avec des canaux d'écoulement.

Il existe un besoin pour une plaque bipolaire à doubles tôles métalliques permettant d'homogénéiser la température du liquide de refroidissement dans la zone réactive pour une conception à canaux d'écoulement parallèles.

L'invention vise à résoudre un ou plusieurs de ces inconvénients. L'invention porte ainsi sur une plaque bipolaire pour réacteur électrochimique, telle que définie dans les revendications annexées.

L'invention porte également sur les variantes des revendications dépendantes. L'homme du métier comprendra que chacune des caractéristiques de la description ou des revendications dépendantes peut être combinée indépendamment aux caractéristiques d'une revendication indépendante, sans pour autant constituer une généralisation intermédiaire.

L'invention porte également sur un procédé de fabrication d'une plaque bipolaire, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en perspective éclatée d'un exemple d'empilement d'assemblages membrane/électrodes et de plaques bipolaires pour une pile à combustible ;
[Fig.2] est une vue en perspective éclatée de plaques bipolaires et d'un assemblage membrane/électrodes destinés à être empilés pour former des collecteurs d'écoulement à travers l'empilement ;
[Fig.3] est une vue partielle de dessus d'une face d'une plaque bipolaire selon un premier exemple de mise en œuvre ;
[Fig.4] est une vue de dessus schématique par transparence d'un exemple de zone d'homogénéisation pour un deuxième réactif ;
[Fig.5] est une vue en coupe d'un empilement incluant des plaques bipolaires, au niveau d'une zone d'homogénéisation ;
[Fig.6] est une vue en perspective d'une partie d'une zone d'homogénéisation d'une plaque bipolaire selon un exemple de mode de réalisation de l'invention ;
[Fig.7] est une vue en coupe en perspective de la plaque bipolaire de la figure 6, en dehors d'une zone de renfoncements ;
[Fig. 8] est une vue en coupe d'une plaque bipolaire en dehors d'une zone de renfoncements ;
[Fig.9] est une vue en coupe en perspective de la plaque bipolaire de la figure 6, au niveau d'une zone de renfoncements ;
[Fig. 10] est une vue en coupe d'une plaque bipolaire selon un premier exemple de mode de réalisation de l'invention ;
[Fig. 11] est une vue en coupe d'une plaque bipolaire selon un deuxième exemple de mode de réalisation de l'invention ;
[Fig. 12] est une vue en coupe d'une plaque bipolaire selon un troisième exemple de mode de réalisation de l'invention ;
[Fig.13] est un histogramme comparatif des différences de température dans différents canaux d'écoulement de liquide de refroidissement par rapport à une température moyenne, pour une plaque bipolaire selon l'invention et une plaque bipolaire selon l'état de la technique.

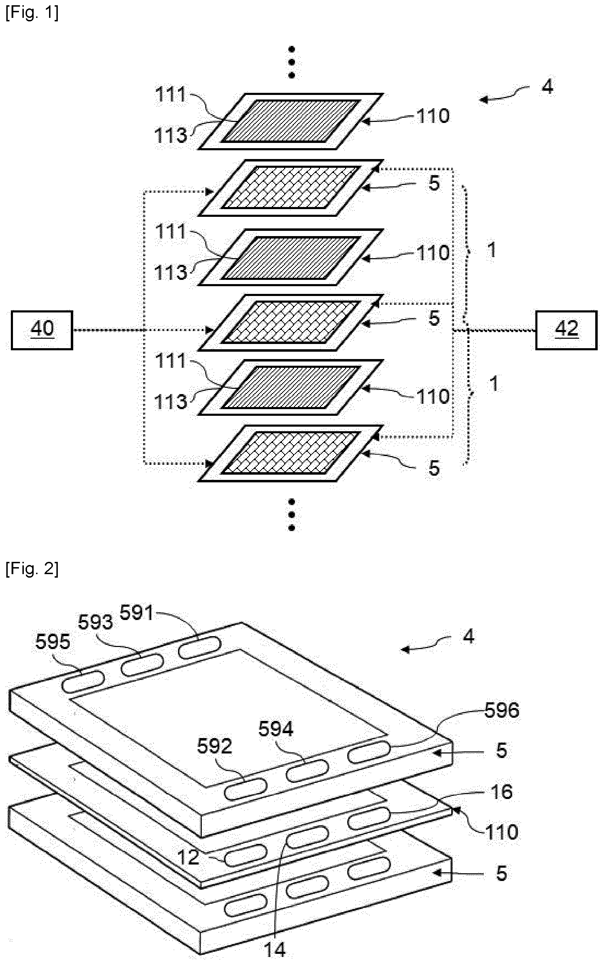

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode.

Entre chaque couple d'AME adjacents, une plaque bipolaire 5 est disposée. Chaque plaque bipolaire 5 définit des canaux d'écoulement anodiques et des canaux d'écoulement cathodiques sur des faces externes opposées. Des plaques bipolaires 5 définissent avantageusement également des canaux d'écoulement de liquide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant.

L'empilement peut également comprendre des joints d'étanchéité périphériques et des renforts de membrane non illustrés ici. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire.

De façon connue en soi, durant le fonctionnement de la pile à combustible 4, de l'air s'écoule entre une AME et une plaque bipolaire, et du dihydrogène s'écoule entre cette AME et une autre plaque bipolaire. Au niveau de l'anode, le dihydrogène est oxydé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 4. L'empilement des plaques bipolaires 5 et des assemblages membrane/électrodes 110 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 110. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 596 sert par exemple pour former un collecteur d'alimentation en carburant, l'orifice 595 sert par exemple pour former un collecteur d'évacuation de résidus de combustion et de carburant non utilisé, l'orifice 593 sert par exemple pour former un collecteur d'alimentation en liquide de refroidissement, l'orifice 594 sert par exemple pour former un collecteur d'évacuation de liquide de refroidissement, l'orifice 591 sert par exemple pour former un collecteur d'alimentation en comburant, et l'orifice 592 sert par exemple pour former un collecteur d'évacuation d'eau produite et de comburant non utilisé.

Les orifices des plaques bipolaires 5 et des assemblages membrane/électrodes 110 sont disposés en vis-à-vis afin de former les différents collecteurs d'écoulement. Des orifices 12, 14 et 16 sont par exemple ménagés dans les assemblages membrane/électrodes 110 et sont disposés en vis-à-vis respectivement des orifices 592, 594 et 596. Dans un but de simplification, l'orifice 596 sera assimilé à un collecteur d'alimentation en carburant de l'empilement.

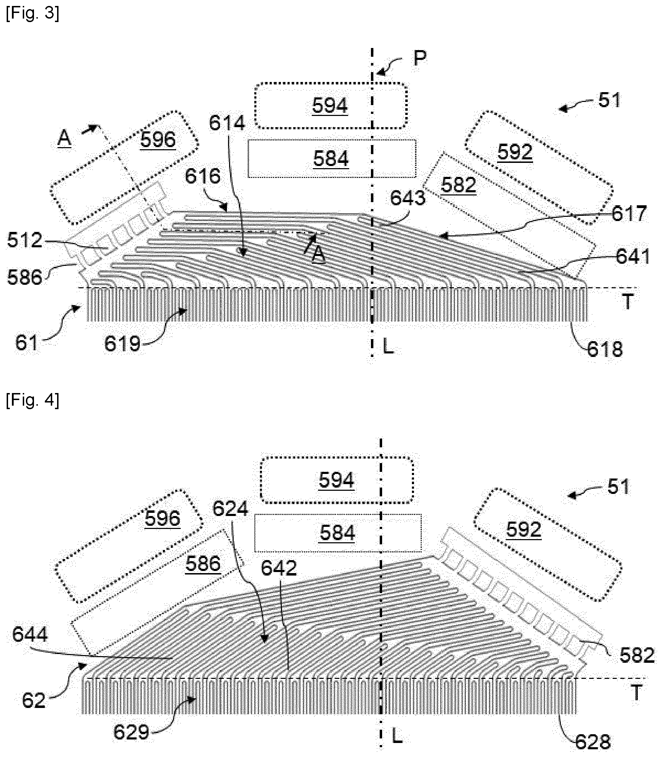

La figure 3 est une vue schématique partielle de dessus d'une tôle conductrice 61 définissant une face externe anodique d'un exemple de mise en œuvre d'une plaque bipolaire 51, au niveau des collecteurs 592, 594 et 596. La figure 4 est une vue schématique partielle de dessus par transparence d'une tôle conductrice 62 définissant une face externe cathodique d'un exemple de mise en œuvre d'une même plaque bipolaire 51, au niveau des collecteurs 592, 594 et 596.

Les tôles conductrices 61 et 62 sont en relief, de façon à ménager des canaux d'écoulement de fluide au niveau des faces externes de la plaque bipolaire 51, et des canaux d'écoulement entre les faces internes des tôles conductrices 61 et 62 sur les faces internes de chacune de cette plaque bipolaire 51. Ainsi, pour chaque plaque bipolaire :
- des canaux d'écoulement de liquide de refroidissement (non illustrés) sont ménagés entre les tôles conductrices 61 et 62,
- des canaux d'écoulement de carburant 618 sont ménagés sur une face externe de la tôle 61, et
- des canaux d'écoulement 628 de comburant et d'eau sont ménagés sur une face externe de la tôle 62.

Les tôles conductrices 61 et 62 sont avantageusement réalisées en acier inoxydable, matériau conducteur très courant et adapté à de nombreux procédés de transformation industriels largement répandus. Selon un mode de réalisation de l'invention, les reliefs des tôles conductrices 61 et 62 sont ainsi par exemple obtenus par emboutissage, des techniques d'estampage et de poinçonnage étant également envisageables.

Les premiers canaux d'écoulement de carburant 618 sont ici de type parallèle et s'étendent selon une même direction longitudinale, correspondant à la ligne en tiret-point L. La direction longitudinale L correspond à la direction d'écoulement de fluide. Les canaux d'écoulement de comburant 628 et de liquide de refroidissement (non représentés) sont également avantageusement de type parallèle et s'étendent selon une même direction L. Ces différents canaux d'écoulement ne sont pas nécessairement rectilignes (ces canaux peuvent présenter une ondulation), leur direction longitudinale étant définie par la droite L reliant leur entrée à leur sortie. Ces différents canaux d'écoulement ne présentent ainsi pas de point de rebroussement par rapport à la direction d'écoulement L à travers les zones réactives 619 et 629.

De façon connue en soi, les différents collecteurs traversant l'empilement communiquent avec des zones d'injection respectives. Dans l'exemple illustré aux figures 3 et 4, le collecteur 596 communique avec une zone d'injection 586, le collecteur 594 communique avec une zone d'injection 584 et le collecteur 592 communique avec une zone d'injection 582. Chaque zone d'injection comporte des orifices d'injection respectifs en communication avec des canaux d'écoulement respectifs. Les zones d'injection 586, 584 et 582 sont décalées latéralement. Les zones d'injection 582 et 586, comprenant des orifices d'injection respectifs, sont notamment disposées de part et d'autre d'un plan P perpendiculaire à leur plaque bipolaire et incluant la direction L des canaux d'écoulement 618 et 628, de façon à pouvoir loger plusieurs collecteurs au niveau d'une même extrémité d'une plaque bipolaire.

Les orifices d'injection 512 de la zone d'injection 586 communiquent avec les canaux d'écoulement 618 par l'intermédiaire d'une zone d'homogénéisation 614. Cette zone d'homogénéisation 614 comporte des canaux d'écoulement 641 délimités par des parois latérales de nervures 643 sur la face externe de la tôle 61.

La zone d'homogénéisation 614 est scindée en une aire d'homogénéisation 616 et une aire d'homogénéisation 617. L'aire d'homogénéisation 616 forme un premier tronçon et comporte des canaux d'écoulement d'homogénéisation dans lesquels débouchent les orifices d'injection 512. Dans cette aire 616, les canaux d'écoulement 641 sont répartis selon une direction T perpendiculaire à la direction d'écoulement de fluide L. La droite T permet avantageusement de délimiter les zones 619 et 614. Chaque canal d'écoulement de l'aire 616 met en communication au moins un orifice 512 avec au moins 2 canaux d'écoulement de l'aire 617. Cette subdivision permet de réaliser une première homogénéisation des pressions du fluide anodique.

L'aire d'homogénéisation 617 forme un deuxième tronçon comportant des branches débouchant dans des canaux d'écoulement 618. Chaque canal d'écoulement de l'aire 617 communique avec au moins 2 premiers canaux d'écoulement de la zone 619. Cette subdivision permet de réaliser une deuxième homogénéisation des pressions du fluide anodique. La scission de la zone d'homogénéisation 614 en deux aires distinctes 616 et 617 permet d'incliner fortement les canaux d'écoulement 641 de l'aire 616 par rapport aux canaux d'écoulement 618, pour favoriser le placement de plusieurs collecteurs d'écoulement à une même extrémité de la plaque bipolaire 51. L'alimentation de plusieurs canaux d'écoulement 618 par un même canal d'écoulement 641 permet de façon générale d'augmenter la compacité de la zone d'homogénéisation 614.

Avantageusement, la zone d'homogénéisation 624 représentée en figure 4, est ménagée sur la face externe de la tôle 62, pour mettre en communication des orifices d'injection de la zone d'injection 582 avec des troisièmes canaux d'écoulement 628 de cette face externe. Avantageusement, cette zone d'homogénéisation 624 est positionnée (au moins partiellement) en superposition avec la zone d'homogénéisation 614.

De façon similaire, la zone d'homogénéisation 624 comprend des canaux d'écoulement 642 séparés les uns des autres par des parois latérales de nervures 644. Chaque canal d'écoulement 642 met en communication au moins un orifice d'injection de la zone 582 avec plusieurs canaux d'écoulement 628.

Une zone d'homogénéisation 614 ou 624 se différencie généralement d'une zone réactive 619 ou 629 incluant les canaux d'écoulement 618 ou 628 :
- par l'absence d'électrode surplombant cette zone d'homogénéisation dans l'assemblage membrane-électrodes ; et/ou
- par la présence de canaux d'homogénéisation présentant une inclinaison par rapport à la direction L des canaux d'écoulement 618 et 628, de façon à rendre les zones d'homogénéisation 614 et 624 plus compactes.

La fonction des zones d'homogénéisation 614 et 624 est notamment de limiter les différences de débits entre les différents canaux d'écoulement 618 et 628 respectivement, et d'homogénéiser les pertes de charges pour les différents chemins d'écoulement possibles pour le réactif considéré.

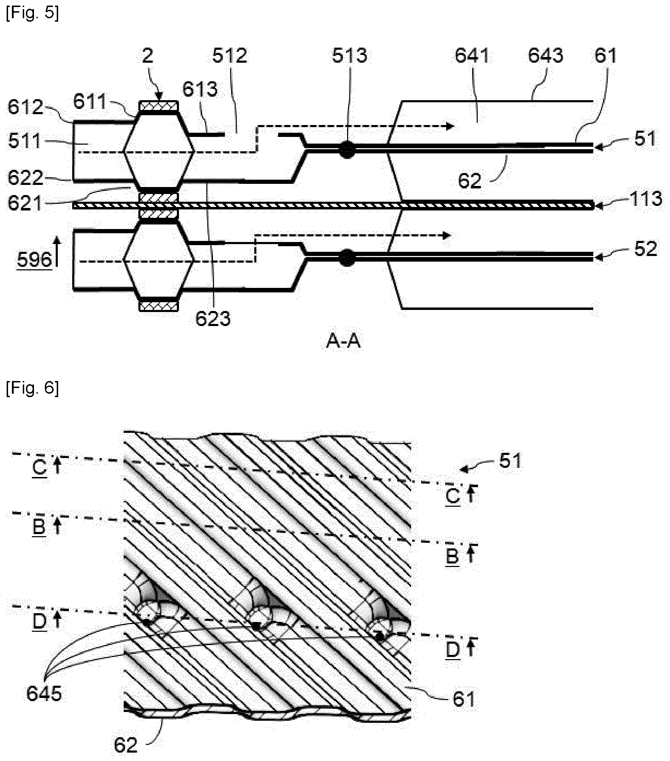

La figure 5 est une vue en coupe d'une plaque bipolaire 51, empilée avec une autre plaque bipolaire identique 52, et entre lesquelles une membrane 113 d'un assemblage membrane/électrodes est disposée. La vue représentée ici correspond à la coupe A-A de la figure 3, au niveau du collecteur 596 d'alimentation en carburant.

Chacune des plaques bipolaires 51 et 52 illustrées inclut deux tôles conductrices 61 et 62, telles que détaillées précédemment, solidarisées. Les tôles 61 et 62 sont ici solidarisées par l'intermédiaire de soudures 513.

Les orifices d'injection 512 sont ménagés dans la tôle 61 dans la zone d'injection 586. Ces orifices 512 communiquent avec le collecteur 596 par l'intermédiaire d'un passage 511 :
- traversant des nervures 612 et 622 ;
- traversant des nervures 611 et 621 de support de joints 2, les nervures 611 et 621 entourant le collecteur 596 ; et
- traversant des nervures 613 et 623.

Les nervures 612 et 613 sont ménagées de part et d'autre de la nervure 611 dans la tôle 61, les nervures 622 et 623 étant ménagées de part et d'autre de la nervure 621 dans la tôle 62.

Des communications de fluide non détaillées et non illustrées sont également ménagées d'une part entre le collecteur 594 et la zone d'injection 584, et d'autre part entre le collecteur 592 et la zone d'injection 582.

L'invention propose d'homogénéiser les températures du liquide de refroidissement circulant dans les canaux de liquide de refroidissement, dans la zone réactive entre les tôles conductrices 61 et 62, en intégrant des bossages orientés vers le bas, appelés renfoncements, au fond de seulement certains canaux de la zone d'homogénéisation 614 de la tôle conductrice 61. On désignera par renfoncement un relief, disposé à l'opposée des nervures de la zone d'homogénéisation 614 par rapport à un plan délimitant le fond des canaux d'écoulement 641.

La figure 6 est une vue en perspective d'une partie de la zone d'homogénéisation d'une plaque bipolaire 51, résultant de la superposition de la tôle conductrice 61, sur laquelle des renfoncements 645 ont été pratiqués selon un exemple de mode de réalisation de l'invention, sur la tôle conductrice 62. Les renfoncements 645 sont ici alignés selon l'axe D-D. Cet axe D-D est avantageusement parallèle à la direction transversale T et se situe à proximité de ladite droite T, telle que décrite précédemment.

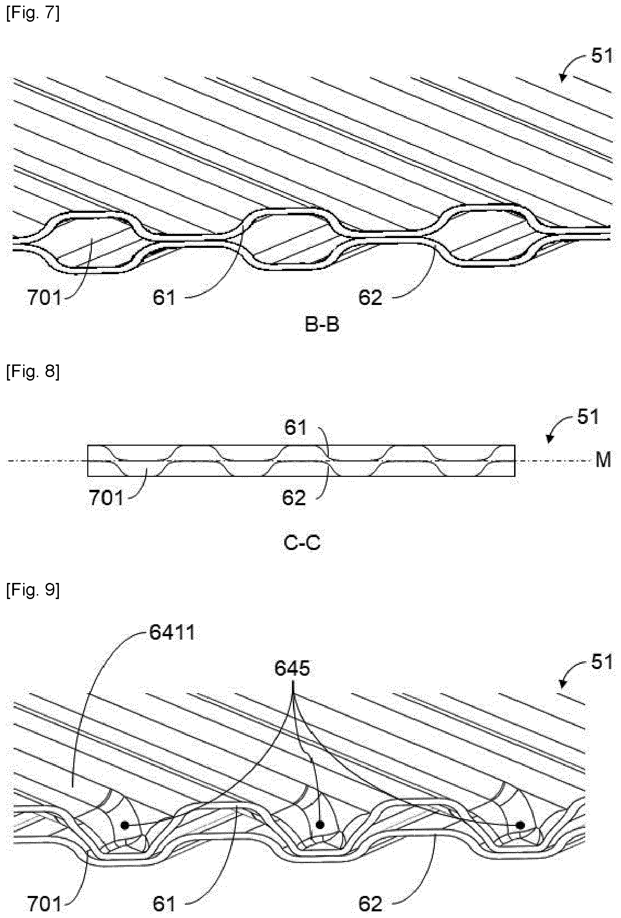

Une vue en coupe en perspective de la plaque bipolaire 51 selon l'axe B-B situé en dehors d'une zone de renfoncements est détaillée figure 7. Les points hauts de la tôle 61 sont alignés avec les points bas de la tôle 62. La section 701 de passage du liquide de refroidissement présente ainsi sa taille maximale, avec possibilité de flux dans toutes les directions.

Une vue en coupe de la plaque bipolaire 51 selon l'axe C-C situé en dehors d'une zone de renfoncements est détaillée figure 8. Les points hauts de la tôle 61 sont cette fois-ci alignés avec les points hauts de la tôle 62. La section 701 de passage du liquide de refroidissement présente donc une taille réduite par rapport à la figure 7. Etant en dehors d'une zone de renfoncement, on observe que :
- la profondeur des nervures pratiquées sur les surfaces externes des tôles 61 et 62 ne dépasse pas le plan médian M situé à égale distance desdites surfaces externes.
- les sections 701 de passage du liquide de refroidissement sont de taille constante sur l'axe de la coupe représentée.

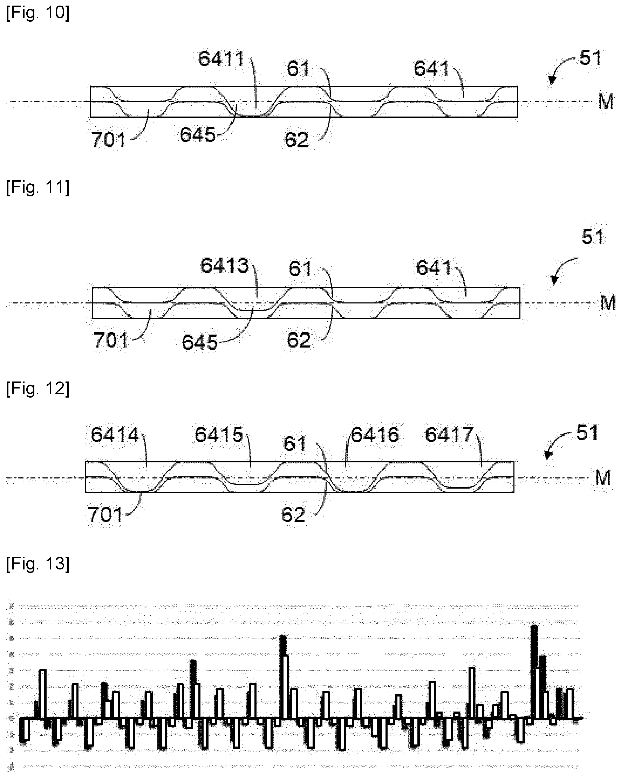

Une vue en coupe en perspective de la plaque bipolaire 51 selon l'axe D-D, situé dans une zone de renfoncements, est détaillée figure 9. Au niveau de ces renfoncements 645, la profondeur d'une ou plusieurs rainures pratiquées sur la tôle 61 dépassent par endroit le plan médian M situé à égale distance des surfaces externes des tôles 61 et 62. La section 701 de passage du liquide de refroidissement modifiée présente sa taille minimale, avec une forte réduction de la section. Cette réduction de section peut varier dans sa taille, en fonction de la profondeur des renfoncements pratiqués. Cette réduction de section peut varier dans sa fréquence, en fonction du nombre de rainures de la zone d'homogénéisation dans lesquelles un renfoncement aura été pratiqué. Les vues des figures 10, 11 et 12 sont des vues en coupe de la plaque bipolaire 51 au niveau de zones de renfoncements présentant des exemples des modes de réalisation de l'invention.

Selon l'invention, la section de passage de liquide de refroidissement au niveau d'un renfoncement 645 prend une valeur minimale Smin nulle sous le canal d'écoulement (dit de restriction) dans lequel il est formé. Le long de ce canal d'écoulement, il s'agit de l'emplacement où la section de passage de liquide de refroidissement est la plus faible. Pour les autres canaux d'écoulement 641, on peut définir une valeur minimale de la section de passage de liquide de refroidissement à la verticale de chacun d'eux. Selon l'invention, il existe un autre canal d'écoulement 641 pour lequel cette valeur minimale de la section de passage de liquide de refroidissement prend une valeur Salt, supérieure à Smin.

A la figure 10, on observe un renfoncement unique 645 dans seul canal de restriction 6411 sur la surface externe de la tôle conductrice 61 selon un premier exemple de mode de réalisation de l'invention. Au niveau du renfoncement, la tôle 61 dépasse le plan médian M et obstrue totalement le canal d'écoulement du liquide de refroidissement. Selon ce premier mode de réalisation de l'invention, la section de passage de liquide de refroidissement Smin a une valeur nulle en un point unique de la surface externe de la tôle 61.

A la figure 11, on observe un renfoncement unique 645 dans un seul canal de restriction 6413 sur la surface externe de la tôle conductrice 61 selon un second exemple de mode de réalisation de l'invention. Au niveau du renfoncement 645, la tôle 61 dépasse le plan médian M mais n'obstrue que partiellement le canal d'écoulement du liquide de refroidissement. Selon ce deuxième mode de réalisation de l'invention, la section de passage de liquide de refroidissement Smin est strictement supérieure à zéro

A la figure 12, on observe plusieurs renfoncements 645 dans plusieurs canaux 6414, 6415, 6416 et 6417 de la surface externe de la plaque 61, selon un troisième exemple de mode de réalisation de l'invention. La profondeur des renfoncements dépassant le plan médian M varie d'une rainure à l'autre. Dans les canaux 6414 et 6416, on observe que Smin a une valeur nulle ; ces canaux sont dits de restriction, tels que décrits précédemment. Dans les canaux 6415 et 6417, on observe que la section de passage est supérieure à Smin ; cette section est appelée Spas et les canaux 6415 et 6417 sont dits de passage. Enfin, certains canaux de la plaque 61, non représentés, peuvent ne pas présenter de renfoncement.

La figure 13 est un histogramme comparatif des différences de température en sortie de chaque canal d'écoulement de liquide de refroidissement de la surface active 619 par rapport à une température de sortie moyenne, pour une plaque bipolaire selon l'invention et une plaque bipolaire selon l'état de la technique. L'abscisse correspond à un indice de canal, l'ordonnée à une différence de température en °C. Sur cette figure, les barres noires de l'histogramme correspondent aux résultats de simulation avec une zone d'homogénéisation selon l'état de la technique. Les barres blanches présentent les résultats de la simulation avec des zones d'homogénéisation 614 et 624 selon l'invention. On constate qu'une zone d'homogénéisation 614 selon l'invention permet de réduire la disparité de température en sortie des canaux d'écoulement de liquide de refroidissement par rapport aux résultats obtenus selon l'état de la technique.

L'invention a été décrite en référence à une pile à combustible. L'invention peut également s'appliquer à d'autres types de réacteurs électrochimiques, par exemple des électrolyseurs.

## Revendications

1. Plaque bipolaire (5) pour réacteur électrochimique comprenant des première et deuxième tôles conductrices (61, 62), **caractérisée en ce qu'**elle comporte :
- une zone réactive (619) ;
- un premier collecteur d'écoulement de fluide (596) ;
- des premiers canaux d'écoulement (618) sur la face externe de la première tôle, disposés dans la zone réactive (619), s'étendant selon une direction longitudinale d'écoulement de fluide ;
- une première zone d'homogénéisation (614) comportant des deuxièmes canaux d'écoulement (641) délimités par des premières nervures (643) sur la face externe de la première tôle et répartis selon une direction perpendiculaire à une direction d'écoulement dans la première zone d'homogénéisation, les premiers canaux d'écoulement (618) étant connectés au premier collecteur d'écoulement de fluide (596) par l'intermédiaire de la première zone d'homogénéisation (614);
- un deuxième collecteur d'écoulement de fluide (592) ;
- des troisièmes canaux d'écoulement (628) sur la face externe de la deuxième tôle, disposés dans la zone réactive (619) et s'étendant selon la direction longitudinale; et
- une deuxième zone d'homogénéisation (624) comportant des quatrièmes canaux d'écoulement (642) délimités par des deuxièmes nervures (644) sur la face externe de la deuxième tôle et répartis selon une direction perpendiculaire à une direction d'écoulement dans la deuxième zone d'homogénéisation, les troisièmes canaux d'écoulement (628) étant connectés au deuxième collecteur d'écoulement de fluide (592) par l'intermédiaire de la deuxième zone d'homogénéisation (624) ;
- des canaux d'écoulement de liquide de refroidissement ménagés entre les première et deuxième tôles et s'étendant selon la direction longitudinale dans la zone réactive ;
- dans laquelle :
- au moins un deuxième canal d'écoulement dit de restriction (6411) comporte un renfoncement (645) pénétrant dans une deuxième nervure respective (644), de sorte que la section transversale de passage de liquide de refroidissement à la verticale de ce deuxième canal d'écoulement de restriction ait une valeur la plus basse Smin à la verticale du renfoncement (645) ;
- la valeur la plus basse Salt de la section transversale de passage de liquide de refroidissement à la verticale d'au moins un autre deuxième canal d'écoulement est supérieure à Smin.

2. Plaque bipolaire (5) pour réacteur électrochimique selon la revendication 1, dans laquelle la valeur Smin est nulle.

3. Plaque bipolaire (5) pour réacteur électrochimique selon la revendication 1, dans laquelle la valeur Smin est non nulle.

4. Plaque bipolaire (5) pour réacteur électrochimique selon l'une quelconque des revendications précédentes, dans laquelle lesdits canaux d'écoulement de liquide de refroidissement sont des canaux parallèles s'étendant sans point de rebroussement à travers la zone réactive (619).

5. Plaque bipolaire (5) pour réacteur électrochimique selon l'une quelconque des revendications précédentes, dans laquelle lesdites première et deuxième tôles (61, 62) sont des tôles embouties (61, 62) dont des reliefs définissent lesdits canaux d'écoulement, lesdits renfoncements (645) et lesdites nervures (644).

6. Plaque bipolaire (5) pour réacteur électrochimique selon la revendication 5, dans laquelle lesdites tôles (61, 62) sont en métal conducteur.

7. Plaque bipolaire (5) pour réacteur électrochimique selon l'une quelconque des revendications précédentes, dans laquelle lesdits premiers canaux d'écoulement (618) sont des canaux d'écoulement anodiques.

8. Plaque bipolaire (5) pour réacteur électrochimique selon l'une quelconque des revendications précédentes, dans laquelle chacun desdits deuxièmes canaux d'écoulement (641) communique avec au moins deux premiers canaux d'écoulement (618).

9. Plaque bipolaire (5) pour réacteur électrochimique selon l'une quelconque des revendications précédentes, dans laquelle ledit renfoncement (645) est disposé à proximité de la liaison entre ledit deuxième canal d'écoulement de restriction (6411) et un premier canal d'écoulement (618).

10. Plaque bipolaire (5) pour réacteur électrochimique selon l'une quelconque des revendications précédentes, dans laquelle plusieurs desdits deuxièmes canaux d'écoulement (6411) sont dits de restriction et comportent un renfoncement (645) pénétrant dans une deuxième nervure respective (644), de sorte que la section transversale de passage de liquide de refroidissement à la verticale de ces deuxièmes canaux d'écoulement de restriction (6411) ait la même valeur la plus basse Smin à la verticale de leur renfoncement respectif, lesdits renfoncements respectifs (645) étant alignés selon la direction perpendiculaire à la direction d'écoulement dans la première zone d'homogénéisation (614).

11. Plaque bipolaire (5) pour réacteur électrochimique selon l'une quelconque des revendications précédentes, dans laquelle plusieurs desdits deuxièmes canaux d'écoulement sont dits de passage et comportent un renfoncement (645) pénétrant dans une deuxième nervure respective (644), de sorte que la section transversale de passage de liquide de refroidissement à la verticale de ces deuxièmes canaux d'écoulement de passage ait la même valeur la plus basse Spas à la verticale de leur renfoncement respectif, avec Spas> Smin, lesdits renfoncements respectifs (645) étant alignés selon la direction perpendiculaire à la direction d'écoulement dans la première zone d'homogénéisation.

12. Procédé de fabrication d'une plaque bipolaire, comprenant les étapes de :
- former des premier et deuxième collecteurs d'écoulement de fluide (596, 592) ;
- par emboutissage de première et deuxième tôles conductrices, former :
- une zone réactive (619) ;
- un premier collecteur d'écoulement de fluide (596) ;
- des premiers canaux d'écoulement (618) sur la face externe de la première tôle, disposés dans la zone réactive (619), s'étendant selon une direction longitudinale d'écoulement de fluide ;
- une première zone d'homogénéisation (614) comportant des deuxièmes canaux d'écoulement (641) délimités par des premières nervures (643) sur la face externe de la première tôle et répartis selon une direction perpendiculaire à une direction d'écoulement dans la première zone d'homogénéisation, les premiers canaux d'écoulement (618) étant connectés au premier collecteur d'écoulement de fluide (596) par l'intermédiaire de la première zone d'homogénéisation (614);
- un deuxième collecteur d'écoulement de fluide (592) ;
- des troisièmes canaux d'écoulement (628) sur la face externe de la deuxième tôle, disposés dans la zone réactive (619) et s'étendant selon la direction longitudinale; et
- une deuxième zone d'homogénéisation (624) comportant des quatrièmes canaux d'écoulement (642) délimités par des deuxièmes nervures (644) sur la face externe de la deuxième tôle et répartis selon une direction perpendiculaire à une direction d'écoulement dans la deuxième zone d'homogénéisation, les troisièmes canaux d'écoulement (628) étant connectés au deuxième collecteur d'écoulement de fluide (592) par l'intermédiaire de la deuxième zone d'homogénéisation (624) ;
- des canaux d'écoulement de liquide de refroidissement ménagés entre les première et deuxième tôles et s'étendant selon la direction longitudinale dans la zone réactive ;
- au moins un deuxième canal d'écoulement formé, dit de restriction (6411) comporte un renfoncement (645) pénétrant dans une deuxième nervure respective (644), de sorte que la section transversale de passage de liquide de refroidissement à la verticale de ce deuxième canal d'écoulement de restriction ait une valeur la plus basse Smin à la verticale du renfoncement (645) ;
- la valeur la plus basse Salt de la section transversale de passage de liquide de refroidissement à la verticale d'au moins un autre deuxième canal d'écoulement formé est supérieure à Smin.
